# EUROPEAN PATENT SPECIFICATION

(11) **EP 2 048 418 B1**
(45) Date of publication and mention of the grant of the patent: **22.05.2013**
(21) Application number: 07425775.9
(22) Date of filing: 06.12.2007
(51) Int. Cl.: F16K 31/06, F16K 31/56, F16K 17/38, A62C 35/68

(54) **Safety electrovalve**
Sicherheitselektroventil
Electrorobinet de sécurité

(30) Priority: 11.10.2007 IT BS20070155
(43) Date of publication of application: 15.04.2009
(73) Proprietor: Pietro Fiorentini S.p.A., 36057 Arcugnano (VI) (IT)
(72) Inventor: Ravazzolo, Romano, 25128 Brescia (IT)
(74) Representative: Bonini, Ercole

(56) References cited:
- WO-A1-96/28218
- GB-A- 2 159 249
- JP-A- 9 248 349
- US-A- 2 998 018
- US-A- 4 971 094

## Description

The present invention relates to a safety electrovalve, preferably of the manual reset type, that is, a device inserted along a fluid flow duct and suitable for interrupting the fluid flow between the inlet and the outlet of the valve body subsequent to an electrical signal, generally coming from detection means suitable for detecting the presence of fluid leaks, telluric movements and the like, or coming from specific valve control means.

As is known, safety electrovalve are often used in both civil and industrial environments, exposed to a high risk of fires, that may be triggered due to leaks in the distribution system of the same fluid carried, usually gas, or for other external causes.

An example of safety electovalve is disclosed in document US 2998018 A.

While suitable safety systems are provided for such environments, such as fire-fighting systems, it is highly appropriate to provide specific devices for safety valves, so as to interrupt the fluid flow, for example so as to prevent explosions or further propagation of the fire.

The object of the present invention is to provide a safety electrovalve capable of interrupting the fluid flow in a distribution line subsequent to overheating, especially subsequent to a fire, without the need of other electrical operations.

Such object is achieved by an electrovalve made according to claim 1. The dependent claims describe embodiment variations.

The features and advantages of the safety electrovalve according to the present invention will appear more clearly from the following description, made by way of an indicative and non-limiting example with reference to the annexed figures, wherein:

- figure 1a shows a perspective view of a safety electrovalve according to the present invention, in a preferred embodiment in an open configuration;

- figure 1b shows the electrovalve of figure 1a, in a closed configuration;

- figure 2a shows a cutaway view of a normally open electrovalve, according to the present invention, in an open configuration of the shutter device;

- figure 2b shows the electrovalve of figure 2a, in a closed configuration of the shutter device;

- figure 3a shows a cutaway view of a normally closed electrovalve, according to the present invention, in an open configuration of the shutter device;

- figure 3b shows the electrovalve of figure 3a, in a closed configuration of the shutter device;

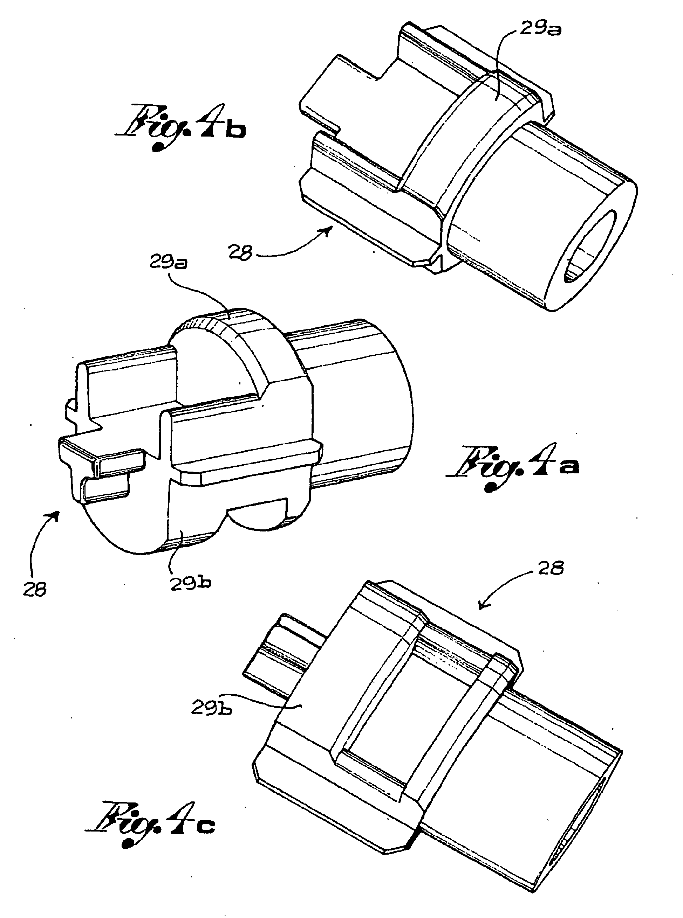

- figures 4, 4b and 4c show perspective views of a stop member of the electrovalve shutter device according to the present invention.

With reference to the annexed figures, reference numeral 1 globally denotes a safety electrovalve suitable for being arranged along a duct of a system for distributing a fluid, for example gas.

Electrovalve 1 comprises an internally hollow valve body 2, having an inlet 4 associable to the duct upstream of the electrovalve for the fluid inlet and an outlet 6 associable to the duct downstream of the electrovalve for the fluid outlet, for example to a utility.

Electrovalve 1 further comprises a shutter device arranged between inlet 4 and outlet 6, suitable for switching from an open configuration, wherein it allows the fluid flow between the inlet and the outlet, to a closed configuration wherein it does not allow such flow.

According to the invention, the shutter device comprises a closing plate 8 suitable for closing the passage between the inlet and the outlet of the valve body.

For example, closing plate 8 comprises an annular seal 10, for example facing the space communicating with the fluid inlet, intended for resting against projections 12 inside the valve body and protruding therefrom, for ensuring the fluid seal.

Moreover, the shutter device comprises a shutter shaft 14 having a shaft axis Y along which the plate, which is integral to the shaft, is shifting.

Shaft 14 exhibits an extension along the shaft axis Y such as to at least partly protrude from the valve body 2.

Advantageously, the electrovalve is thus provided with a device for signalling the open/closed status of the shutter device.

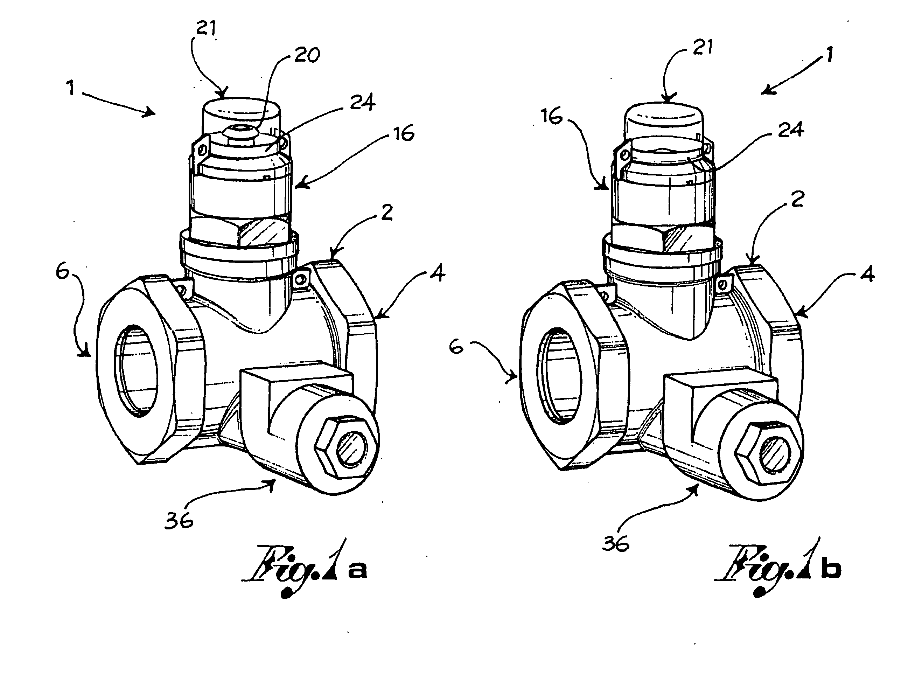

In other words, when the shutter device is in the closed configuration (figure 1b, 2b and 3b), the shaft end external to the valve body has a predetermined distance from a fixed reference of the valve body, thus signalling the closed status of the shutter device.

When the shutter device is in the open configuration (figure 1a, 2a and 3a), the plate is spaced from projections 12 so as to allow the fluid flow and the outer end of shaft 14 has a greater distance from the fixed reference

According to a preferred embodiment, the shutter device further comprises a cap 16 fixed to the valve body 2 in a removable manner; shaft 14 crosses cap 16 to protrude outwards.

Preferably, moreover, the shutter device comprises a sealing ring 18, fitted on the shutter shaft 14, compressed between cap 16 and said shutter shaft 14.

Advantageously, the sealing ring allows limiting the entrance of humidity, liquids and dirt from the exterior inside the valve body, through the air space formed between shaft 14 and the cap (16).

According to the invention, electrovalve 1 comprises a knob 20, usable for the manual reset of the valve, fixed to the shutter shaft 14, to the outer end thereof, that is, to the shaft end protruding from the valve body.

Moreover, the electrovalve comprises a closing cap 21, removably associable to the valve body so as to surmount the protruding end of the shutter shaft 14.

For example, closing cap 21 is screwed on cap 16, in turn screwed to the valve body 2.

Closing cap 21 comprises a side wall 22 at least partly transparent or in any case sufficiently transparent to make the outer end of the shutter shaft 14 contained therein or knob 20 contained therein, visible.

Closing cap 21 further comprises a signalling reference 24 on said side wall, for example an opaque non transparent band, generally coloured, for signalling the position of the end of the shutter shaft 14 or of knob 20 relative to reference 24.

Electrovalve 1 further comprises a shutter spring 26, suitable for constantly influencing the shutter device towards the closed configuration.

For example, the shutter spring 26 is arranged in compression between cap 16 and shaft 14 of the shutter device.

According to a preferred embodiment, the shutter device comprises an abutment disc 27, integral to the shutter shaft 14, for example concentric thereto. In said embodiment, the shutter spring 26 is placed in compression between cap 16 and the abutment disc 27.

In an even further embodiment variation, shutter spring 26 is abutted on closing plate 8.

Electrovalve 1 further comprises locking means suitable for switching from an engaged configuration, wherein they are engaged with the shutter device to keep it into the open configuration, to a disengaged configuration, wherein they allow the switching of the shutter device to the closed configuration.

The locking means can be electrically actuated from the engaged configuration to the disengaged configuration and comprise an abutment element 28, engaged in the engagement configuration with the shutter device for keeping it into the open configuration.

The abutment element 28 is thermally yielding for structurally yielding in a predetermined thermal condition and allowing the switching of the shutter device from the open configuration to the closed configuration under the action of the shutter spring 26.

For example, the abutment element 28 is at least partly made of a plastic material or a material with predetermined melting point.

In other words, the plastic material making up the abutment element 28 is selected in the valve design stage so as to undergo a structural softening when the temperature is higher than a predetermined threshold temperature; in particular, the structural softening is such that the spring action on the disc, which is transmitted to the abutment element 28 through the shutter shaft 14, overcomes the residual resistance of the abutment element 28, causing the lowering of closing plate 8.

Electrovalve 1 further comprises activation means suitable for moving the locking element 28 for moving the shutter device from the closed configuration to the open configuration and vice versa.

According to a preferred embodiment, the activation means comprise a mobile core 30 shifting relative to the valve body, along a locking axis X, under the action of a magnetic field. The abutment element 28 is integral in shifting with the mobile core 30.

The activation means further comprise a fixed core 32, secured in fixed position relative to the valve body 2, a release spring 34, arranged in compression between a fixed abutment and the abutment element 28, and a reel 36, arranged about the fixed core 32 and the mobile core 30, suitable for generating a magnetic field for the shifting of the mobile core 30 subsequent to an electrical signal.

Moreover, according to a further embodiment, the locking means comprise a containment enclosure 40 associated to the valve body 2 in a removable manner, wherein there are seated the fixed core 30 and the mobile core 32. Reel 36 is fitted externally on the containment enclosure 40. For example, the release spring 34 is in compression between the abutment element 28 and the head of enclosure 40.

The shutter axis Y and the locking axis X are incident, for example perpendicularly.

Preferably, the abutment element 28 is mounted at the end of the mobile core 30 close to the end of the shutter shaft 14.

According to a preferred embodiment, the abutment element 28 is mountable in two configurations, to obtain a normally open or a normally closed electrovalve.

Preferably, the abutment element 28 exhibits a predetermined axial extension along the locking axis X and comprises radial projections 29a, 29b, axially positioned and/or sized in a different manner, so as to structurally interfere with the shutter shaft 14, keeping closing plate 8 lifted and thus the shutter device in the open configuration, when the activation means are activated or when they are deactivated, thus obtaining a normally closed or normally open electrovalve.

According to a predetermined embodiment, the radial projections 29a, 29b of the abutment element 28 are arranged in two different half-spaces, determined by a plane passing by the locking axis and perpendicular to the shutter axis Y, axially spaced from one another.

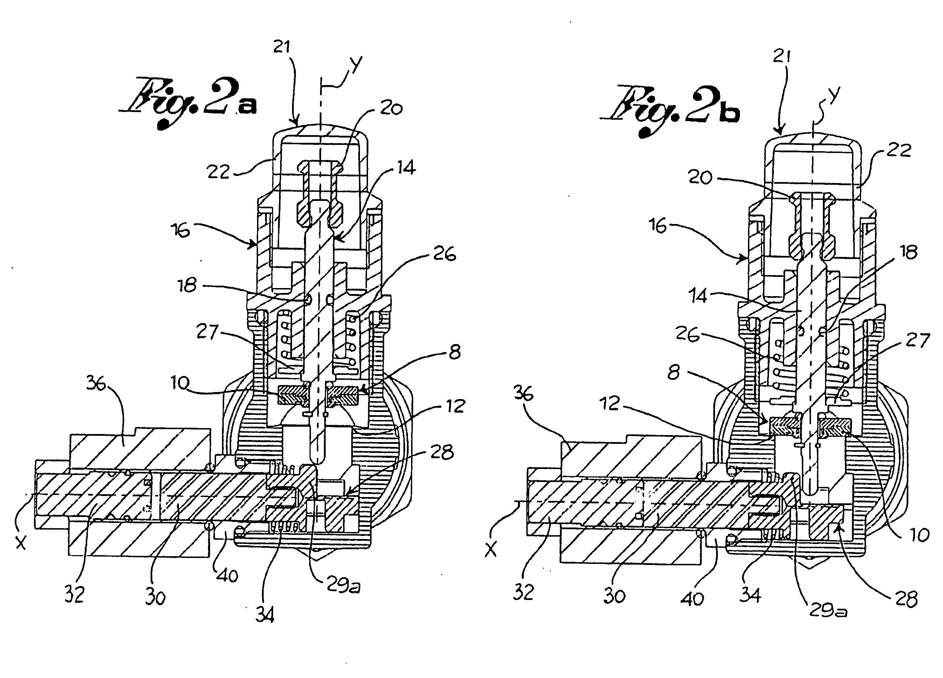

For a normally open electrovalve, in the standard operating conditions, the shutter device is in the open configuration and there are no electrical signals on the reel (figure 2a). The release spring 34 pushes the abutment element 28 in abutment with the wall of the valve body, also pulling the mobile core 30 in removal from the fixed core 32.

The radial projection 29a interferes with the shutter shaft 14, lifting it so that closing plate 8 is lifted, so the shutter device is in the open configuration.

In the presence of an electrical control signal, the activation means start: the mobile core 30 shifts towards the fixed core 32, overcoming the action of the release spring 34, pulling the abutment element 28 up to extract the radial projection 29a from underneath the shutter shaft 14 (figure 2b).

The shutter spring 26 then operates on the shutter shaft 14, moving the plate in abutment with the inner projections 12 of the valve body, moving the shutter device to the closed configuration.

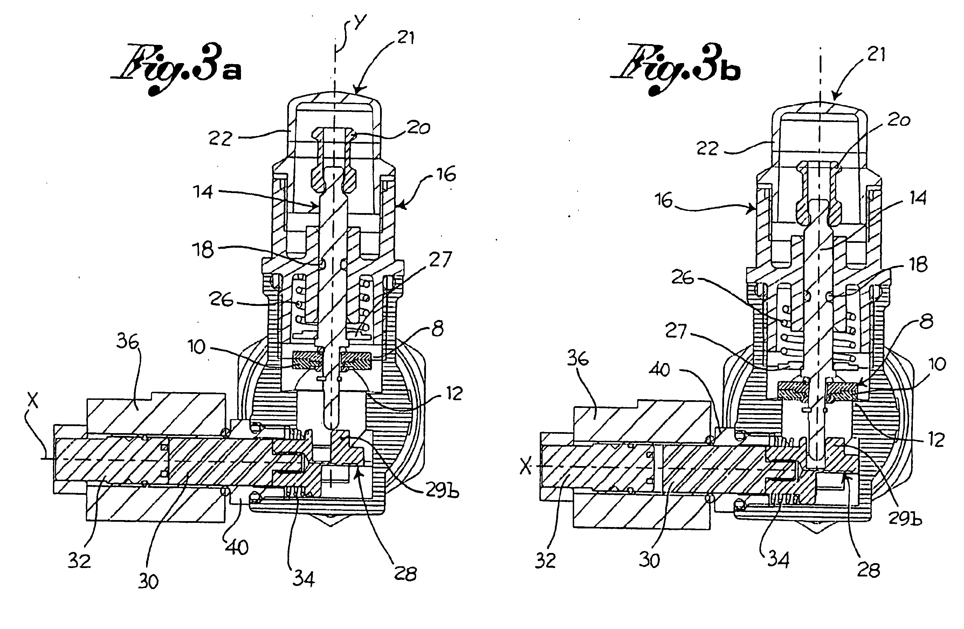

For a normally closed electrovalve, in the standard operating conditions, the shutter device is in the open configuration and there is a continuous electrical signal on the reel (figure 3a). The mobile core 30 is attracted by the fixed core 32 and the action of the release spring 34 is overcome.

The abutment element 28 is mounted turned relative to the condition described above for a normally open electrovalve, so that the radial projection 29b interferes with the shutter shaft 14, lifting it so that closing plate 8 is lifted, so the shutter device is in the open configuration.

In the absence of an electrical signal, the activation means deactivate: the mobile core 30 shifts away from the fixed core 32 under the action of the release spring 34, pushing the abutment element 28 up to extract the radial projection 29b from underneath the shutter shaft 14 (figure 3b).

The shutter spring 26 then operates on the shutter shaft 14, moving the plate in abutment with the inner projections 12 of the valve body, moving the shutter device to the closed configuration.

Both for the normally open electrovalve and for that normally closed, from the closed configuration of the shutter device (figures 2b and 3b, respectively), a manual reset is required to return to the open configuration.

In other words, the abutment element 28 is shaped so that when the shutter device is in the closed configuration, it mechanically interferes with the shutter shaft 14. In the jargon, such electrovalve is defined "manual reset", since it requires a technician's action to be returned to the open configuration of the shutter device.

Both for the normally open electrovalve and for that normally closed, from the open configuration of the shutter device such an increase of temperature as to cause a softening of the abutment element 28, or a part thereof, in particular the radial projections 29a, 29b, brings the shutter device to the closed configuration.

Innovatively, the electrovalve according to the present invention allows closing subsequent to a fire or in any case when the thermal conditions are dangerous, for example following a short circuit of the reel.

Advantageously, moreover, the electrovalve according to the present invention can be configured as normally open or normally closed electrovalve in a very simple manner, suitably mounting the abutment element.

Advantageously, moreover, the electrovalve allows a quick display of the open/closed status, useful for the technicians to intervene in a short time, for example to reset the valve.

It is clear that a man skilled in the art can make changes and adjustments to the electrovalve described above in order to meet specific and incidental needs, all falling within the scope of protection defined in the following claims.

## Claims

1. Safety electrovalve (1) suitable for being arranged along a duct of a fluid distribution system, comprising:
- a valve body (2), having an inlet (4) associable to the duct upstream of the electrovalve for allowing the fluid to enter and an outlet (6) associable to the duct downstream of the electrovalve for allowing the fluid to exit
- a shutter device arranged between the inlet (4) and the outlet (6), suitable for switching from an open configuration, wherein it allows the fluid flow between the inlet (4) and the outlet (6), to a closed configuration wherein it does not allow such flow;
- a shutter spring (26), suitable for constantly influencing the shutter device towards the closed configuration;
- locking means suitable for switching from an engaged configuration, wherein they are engaged with the shutter device to keep it into the open configuration, to a disengaged configuration, wherein they allow the switching of the shutter device to the closed configuration, said locking means being electrically actuated from the engaged configuration to the disengaged configuration and comprising an abutment element (28), engaged in the engagement configuration with the shutter device for keeping it into the open configuration;
wherein the abutment element (28) is thermally yielding for structurally yielding in a predetermined thermal condition and allowing the switching of the shutter device from the open configuration to the closed configuration under the action of the shutter spring (26);
wherein the shutter device comprises:
i) a closing plate (8) suitable for closing the passage between the inlet and the outlet of the valve body, and
ii) the shutter shaft (14), integral to the plate, having the shaft axis (Y) along which the plate is shifting, said shaft exhibiting such extension along the shaft axis as to at least partly protrude from the valve body.
**characterized by** the fact that the electrovalve also comprises:
i) a knob (20) fixed to the shutter shaft (14);
ii) a closing cap (21), having a side wall (22) at least partly transparent and a signalling reference (24) on
said side wall (22), for signalling the knob (20) position relative to said reference (24).

2. Electrovalve according to claim 1, wherein the abutment element (28) is at least partly made of plastic material.

3. Electrovalve according to claims 1 or 2, comprising activation means for activating/deactivating the locking means, comprising
i) a mobile core (30) shifting along a locking axis (X) under the action of a magnetic field,
said abutment element (28) being integral in shifting with the mobile core (30).

4. Electrovalve according to claim 3, wherein the activation means comprise
ii) a fixed core (32), mounted in fixed position relative to the valve body (2);
iii) a release spring (34), arranged in compression against the abutment element (28), and
iv) a reel (36), arranged about the fixed core (32) and the mobile core (30), suitable for generating a magnetic field for the shifting of the mobile core (30) subsequent to an electrical signal.

5. Electrovalve according to claims3 and 4, wherein the activation means comprise
v) a containment enclosure (40) associated to the valve body (2) in a removable manner, wherein there are seated the fixed core (32) and the mobile core (30),
said reel (36) being fitted externally on the containment enclosure (40).

6. Electrovalve according to claim 1, wherein the shutter device comprises
iii) a cap (16) removably fixed to the valve body (2), said shutter shaft (14) crossing the cap (16) for protruding outwards.

7. Electrovalve according to claim 6, wherein the shutter device comprises
iv) a sealing ring (18), fitted on the shutter shaft (14), compressed between the cap (16) and said shutter shaft (14).

8. Electrovalve according to claim 6 or 7**,** wherein the shutter spring (26) is arranged in compression between the cap (16) and the shutter shaft (14).

9. Electrovalve according to any one of the previous claims, wherein the abutment element (28) is shaped so that, when the shutter device is in the closed configuration, it mechanically interferes with said shutter device in the switching from the disengaged configuration to the engaged configuration.

10. Electrovalve according to claims 1 and 9, wherein the abutment element (28) structurally interferes with a portion of the shutter shaft (14) protruding from the plate (8).

11. Electrovalve according to any one of the previous claims, wherein the locking axis (X) is incident to the shutter axis (Y), for example perpendicularly.

12. Electrovalve according to any one of the previous claims, wherein the abutment element (28) exhibits a predetermined axial extension along the locking axis (X) and comprises radial projections (29a, 29b), axially positioned and/or sized in a different manner, so as to structurally interfere with the shutter shaft 14 for normally keeping the shutter device in the open configuration.

13. Electrovalve according to claims 11 and 12, wherein the radial projections (29a, 29b) of the abutment element (28) are arranged in two different half-spaces, determined by a plane passing by the locking axis (X) and perpendicular to the shutter axis (Y), axially spaced from one another.

14. Safety electrovalve (1) suitable for being arranged along a duct of a fluid distribution system, comprising:
- a valve body (2), having an inlet (4) associable to the duct upstream of the electrovalve for allowing the fluid to enter and an outlet (6) associable to the duct downstream of the electrovalve for allowing the fluid to exit
- a shutter device arranged between the inlet (4) and the outlet (6), suitable for switching from an open configuration, wherein it allows the fluid flow between the inlet (4) and the outlet (6), to a closed configuration wherein it does not allow such flow;
- a shutter spring (26), suitable for constantly influencing the shutter device towards the closed configuration;
- locking means suitable for switching from an engaged configuration, wherein they are engaged with the shutter device to keep it into the open configuration, to a disengaged configuration, wherein they allow the switching of the shutter device to the closed configuration, said locking means being electrically actuated from the engaged configuration to the disengaged configuration and comprising an abutment element (28), engaged in the engagement configuration with the shutter device for keeping it into the open configuration; wherein the abutment element (28) exhibits a predetermined axial extension along the locking axis (X) and comprises radial projections (29a, 29b), axially positioned and/or sized in a different manner, so as to structurally interfere with the shutter shaft (14) for normally keeping the shutter device in the open configuration;
wherein the shutter device comprises:
i) a closing plate (8) suitable for closing the passage between the inlet and the outlet of the valve body, and
ii) the shutter shaft (14), integral to the plate, having the shaft axis (Y) along which the plate is shifting, said shaft exhibiting such extension along the shaft axis as to at least partly protrude from the valve body.
**characterized by** the fact that the electrovalve also comprises:
i) a knob (20) fixed to the shutter shaft (14);
ii) a closing cap (21), having a side wall (22) at least partly transparent and a signalling reference (24) on said side wall (22), for signalling the knob (20) position relative to said reference (24).

15. Electrovalve according to claim 14, wherein the locking axis (X) is incident to the shutter axis (Y), for example perpendicularly.

16. Electrovalve according to claim 15, wherein the radial projections (29a, 29b) of the abutment element (28) are arranged in two different half-spaces, determined by a plane passing by the locking axis (X) and perpendicular to the shutter axis (Y), axially spaced from one another.

## Patentansprüche

1. Sicherheits-Magnetventil (1), dazu geeignet, entlang einer Leitung eines Flüssigkeits-Verteilungssystems angebracht zu werden, Folgendes umfassend:
- einen Ventilkörper (2) mit einem Eingang (4), der zu der Leitung stromaufwärts vom Magnetventil gehört, um den Flüssigkeitseinlauf zu erlauben, und einen Ausgang (6), der zur der Leitung stromabwärts vom Magnetventil gehört, um den Flüssigkeitsauslauf zu erlauben;
- eine Verschlussvorrichtung zwischen dem Eingang (4) und dem Ausgang (6), geeignet zur Umschaltung aus einer geöffneten Konfiguration, welche das Fließen der Flüssigkeit zwischen Eingang (4) und Ausgang (6) erlaubt, in eine geschlossene Konfiguration, in welcher dieses Fließen nicht möglich ist;
- eine Verschlussfeder (26), dazu geeignet, die Verschlussvorrichtung kontinuierlich in die geschlossene Konfiguration zu drücken;
- Sperrmittel, dazu geeignet, aus einer eingerückten Konfiguration, in welcher sie in die Verschlussvorrichtung eingerückt sind, um diese in der geöffneten Konfiguration zu halten, auf eine ausgerückte Konfiguration zu schalten, in welcher sie das Umschalten der Verschlussvorrichtung in die geschlossene Konfiguration erlauben, wobei die besagten Sperrmittel elektrisch aus der eingerückten in die ausgerückte Konfiguration geschaltet werden und ein Anschlagelement (28) umfassen, das in der eingerückten Konfiguration in die Verschlussvorrichtung eingreift, um sie in der geöffneten Konfiguration zu halten;
wobei das Anschlagelement (28) wärmebedingt nachgibt, um in einer vorbestimmten thermischen Situation strukturell nachzugeben und unter Einwirkung der Verschlussfeder (26) das Umschalten der Verschlussvorrichtung aus der geöffneten Konfiguration in die geschlossene Konfiguration zu erlauben;
wobei die Verschlussvorrichtung Folgendes umfasst:
i) einen Schließteller (8), dazu geeignet, den Durchgang zwischen dem Eingang und dem Ausgang des Ventilkörpers zu schließen, und
ii) die mit der Platte eine Einheit bildende Verschlusswelle (14), mit der Wellenachse (Y), entlang welcher der Teller verschiebbar ist, wobei die besagte Welle eine derartige Verlängerung entlang der Wellenachse
aufweist, dass sie wenigstens teilweise aus dem Ventilkörper herausragt, **dadurch gekennzeichnet, dass** das Magnetventil des Weiteren Folgendes umfasst:
i) einen an der Verschlusswelle (14) befestigten Drehschalter (20);
ii) eine Verschlusskappe (21) mit einer wenigstens teilweise durchsichtigen Seitenwand (22) und einer Anzeigemarkierung (24) an der besagten Seitenwand (22) zur Anzeige der Position des Drehschalters (20) bezüglich der besagten Markierung (24).

2. Magnetventil gemäß Patentanspruch 1, wobei das Anschlagelement (28) wenigstens teilweise aus Kunststoff gefertigt ist.

3. Magnetventil gemäß Patentansprüchen 1 oder 2, Aktivierungsmittel zur Aktivierung/Deaktivierung der Sperrmittel umfassend, Folgendes umfassend
i) einen beweglichen Kern (30), der unter Einwirkung eines Magnetfelds entlang einer Sperrachse (X) läuft,
wobei das besagte Anschlagelement (28) sich gemeinsam mit dem beweglichen Kern (30) bewegt.

4. Magnetventil gemäß Patentanspruch 3, wobei die Aktivierungsmittel Folgendes umfassen
ii) einen feststehenden Kern (32), in einer bezüglich des Ventilkörpers (2) festen Position montiert;
iii) eine Freigabefeder (34), unter Kompression gegen das Anschlagelement (28) montiert, und
iv) eine Spule (36), um den feststehenden Kern (32) und den beweglichen Kern (30) angeordnet, dazu geeignet, infolge eines elektrischen Signals ein Magnetfeld für die Verschiebung des beweglichen Kerns (30) zu erzeugen.

5. Magnetventil gemäß den Patentansprüchen 3 und 4, wobei die Aktivierungsmittel Folgendes umfassen
v) ein abnehmbar zum Ventilkörper (2) gehöriges Behältergehäuse (40), welches den feststehenden Kern (32) und den beweglichen Kern (30) aufnimmt,
wobei die besagte Spule (36) extern am Behältergehäuse (40) angebracht ist.

6. Magnetventil gemäß Patentanspruch 1, wobei die Verschlussvorrichtung Folgendes umfasst
iii) eine abnehmbar am Ventilkörper (2) befestigte Kappe (16), wobei die besagte Verschlusswelle (14) die Kappe (16) durchdringt, um nach außen hervorzustehen.

7. Magnetventil gemäß Patentanspruch 6, wobei die Verschlussvorrichtung Folgendes umfasst
iv) einen auf die Verschlusswelle (14) aufgebrachten Dichtring (18), der zwischen der Kappe (16) und der besagten Verschlusswelle (14) zusammengedrückt ist.

8. Magnetventil gemäß Patentanspruch 6 oder 7, wobei sich die Verschlussfeder (26) zusammengedrückt zwischen der Kappe (16) und der Verschlusswelle (14) befindet.

9. Magnetventil gemäß eines jeden der vorstehenden Patentansprüche, wobei das Anschlagelement (28) so geformt ist, dass es bei Verschlussvorrichtung in geschlossener Konfiguration beim Umschalten aus der ausgerückten in die eingerückte Konfiguration mechanisch mit der besagten Verschlussvorrichtung interferiert.

10. Magnetventil gemäß Patentansprüchen 1 und 9, wobei das Anschlagelement (28) strukturell mit einem Abschnitt der Verschlusswelle (14), der aus dem Teller (8) herausragt, interferiert.

11. Magnetventil gemäß eines jeden der vorstehenden Patentansprüche, wobei die Sperrachse (X) auf die Verschlussachse (Y) auftrifft, beispielsweise lotrecht.

12. Magnetventil gemäß eines jeden der vorstehenden Patentansprüche, wobei das Anschlagelement (28) eine vorbestimmte axiale Ausdehnung entlang der Sperrachse (X) aufweist sowie radiale Vorsprünge (29a, 29b), die axial positioniert und/oder in anderer Weise dimensioniert sind, so dass sie strukturell mit der Verschlusswelle (14) interferieren, um die Verschlussvorrichtung normalerweise in der geöffneten Konfiguration zu halten.

13. Magnetventil gemäß Patentansprüchen 11 und 12, wobei die radialen Vorsprünge (29a, 29b) des Anschlagelements (28) in zwei verschiedenen Halb-Räumen angeordnet sind, welche durch eine Ebene definiert sind, die an der Sperrachse (X) verlaufen, lotrecht zur Verschlussachse (Y) liegen und axial voneinander entfernt sind.

14. Sicherheits-Magnetventil (1), dazu geeignet, entlang einer Leitung einer Flüssigkeits-Verteilungsanlage angebracht zu werden, Folgendes umfassend:
- einen Ventilkörper (2) mit einem Eingang (4), der zu der Leitung stromaufwärts vom Magnetventil gehört, um den Flüssigkeitseinlauf zu erlauben, und einen Ausgang (6), der zur der Leitung stromabwärts vom Magnetventil gehört, um den Flüssigkeitsauslauf zu erlauben;
- eine Verschlussvorrichtung zwischen dem Eingang (4) und dem Ausgang (6), geeignet zur Umschaltung aus einer geöffneten Konfiguration, welcher den Fluss der Flüssigkeit zwischen Eingang (4) und Ausgang (6) erlaubt, in eine geschlossene Konfiguration, in welcher dieser Fluss nicht möglich ist;
- eine Verschlussfeder (26), dazu geeignet, die Verschlussvorrichtung kontinuierlich in die geschlossene Konfiguration zu drücken;
- Sperrmittel, dazu geeignet, aus einer eingerückten Konfiguration, in welcher sie in die Verschlussvorrichtung eingerückt sind, um diese in der geöffneten Konfiguration zu halten, auf eine ausgerückte Konfiguration zu schalten, in welcher sie das Umschalten der Verschlussvorrichtung in die geschlossene Konfiguration erlauben, wobei die besagten Sperrmittel elektrisch aus der eingerückten in die ausgerückte Konfiguration geschaltet werden können und ein Anschlagelement (28) umfassen, das in der eingerückten Konfiguration in die Verschlussvorrichtung eingreift, um sie in der geöffneten Konfiguration zu halten;
wobei das Anschlagelement (28) eine vorbestimmte axiale Ausdehnung entlang der Sperrachse (X) aufweist sowie radiale Vorsprünge (29a, 29b), die axial positioniert und/oder in anderer Weise dimensioniert sind, so dass sie strukturell mit der Verschlusswelle (14) interferieren, um die Verschlussvorrichtung normalerweise in der geöffneten Konfiguration zu halten;
wobei die Verschlussvorrichtung Folgendes umfasst:
i) einen Schließteller (8), dazu geeignet, den Durchgang zwischen dem Eingang und dem Ausgang des Ventilkörpers zu schließen, und
ii) die mit der Platte eine Einheit bildende Verschlusswelle (14), mit der Wellenachse (Y), entlang welcher der Teller verschiebbar ist, wobei die besagte Welle eine derartige Verlängerung entlang der Wellenachse aufweist, dass sie wenigstens teilweise aus dem Ventilkörper herausragt,
**dadurch gekennzeichnet, dass** das Magnetventil auch Folgendes umfasst:
i) einen an der Verschlusswelle (14) befestigten Drehschalter (20);
ii) eine Verschlusskappe (21) mit einer wenigstens teilweise durchsichtigen Seitenwand (22) und einer Anzeigemarkierung (24) an der besagten Seitenwand (22) zur Anzeige der Position des Drehschalters (20) bezüglich der besagten Markierung (24).

15. Magnetventil gemäß Patentanspruch 14, wobei die Sperrachse (X) auf die Verschlussachse (Y) auftrifft, beispielsweise lotrecht.

16. Magnetventil gemäß Patentanspruch 15, wobei die radialen Vorsprünge (29a, 29b) des Anschlagelements (28) in zwei verschiedenen Halb-Räumen angeordnet sind, welche durch eine Ebene definiert sind, die an der Sperrachse (X) verlaufen, lotrecht zur Verschlussachse (Y) liegen und axial voneinander entfernt sind.

## Revendications

1. Electrovanne de sécurité (1) indiquée pour être logée le long d'un conduit d'une installation de distribution d'un fluide, comprenant:
- un corps de vanne (2), ayant une entrée (4) qui peut être associée au conduit en amont de l'électrovanne pour consentir au fluide d'entrer et une sortie (6) qui peut être associée au conduit en aval de l'électrovanne pour consentir au fluide de sortir;
- un dispositif obturateur disposé entre l'entrée (4) et la sortie (6), indiqué pour passer d'une configuration d'ouverture, où il permet le passage du fluide entre l'entrée (4) et la sortie (6), à une configuration de fermeture où il ne permet pas ce passage;
- un ressort d'obturation (26) indiqué pour influencer constamment le dispositif obturateur vers la configuration de fermeture;
- des moyens de blocage indiqués pour passer d'une configuration d'engagement, où ils sont engagés avec le dispositif obturateur pour le maintenir dans la configuration d'ouverture, à une configuration de désengagement, où ils permettent le passage du dispositif obturateur à la configuration de fermeture, lesdits moyens de blocage étant actionnables électriquement de la configuration d'engagement à la configuration de désengagement et comprenant un élément de butée (28), engagés dans la configuration d'engagement avec le dispositif obturateur pour le maintenir dans la configuration d'ouverture;
où l'élément de butée (28) est élastique thermiquement pour céder structurellement dans une condition thermique prédéterminée et permettre le passage du dispositif obturateur de la configuration d'ouverture à la configuration de fermeture sous l'action du ressort d'obturation (26);
où le dispositif obturateur comprend:
i) une plaque de fermeture (8) indiquée pour fermer le passage entre l'entrée et la sortie du corps de vanne, et
ii) un arbre d'obturation (14), solidaire de la plaque, ayant un axe d'arbre (Y) le long duquel la plaque peut être déplacée par translation, ledit arbre présentant une extension le long de l'axe d'arbre de façon à ce qu'il puisse sortir au moins partiellement du corps de vanne,
**caractérisée en ce que** l'électrovanne comprend en outre:
i) une molette (20) fixée à l'arbre d'obturation (14);
ii) une calotte de fermeture (21), ayant une paroi latérale (22) au moins partiellement transparente et un repère de signalisation (24) sur ladite paroi latérale (22), pour signaler la position de la molette (20) par rapport audit repère (24).

2. Electrovanne selon la revendication 1, où l'élément de butée (28) est au moins partiellement réalisé en matériel plastique.

3. Electrovanne selon les revendications 1 ou 2, comprenant des moyens d'activation pour l'activation/désactivation des moyens de blocage, comprenant
i) un noyau mobile (30) qui peut être déplacé par translation le long d'un axe de blocage (X) sous l'action d'un champ magnétique,
ledit élément de butée (28) étant solidaire en translation du noyau mobile (30).

4. Electrovanne selon la revendication 3, où les moyens d'activation comprennent
ii) un noyau fixe (32), monté en position fixe par rapport au corps de vanne (2);
iii) un ressort de désengagement (34), disposé en compression contre l'élément de butée (28), et
iv) une bobine (36), disposée autour du noyau fixe (32) et du noyau mobile (30), indiquée pour générer un champ magnétique pour la translation du noyau mobile (30) à la suite d'un signal électrique.

5. Electrovanne selon les revendications 3 et 4, où les moyens d'activation comprennent
v) une enveloppe de contenance (40) associée au corps de vanne (2) de manière amovible, à l'intérieur de laquelle sont logés le noyau fixe (32) et le noyau mobile (30),
ladite bobine (36) étant montée extérieurement sur l'enveloppe de contenance (40).

6. Electrovanne selon la revendication 1, où le dispositif obturateur comprend
iii) un bouchon (16) fixé de manière amovible au corps de vanne (2),
ledit arbre d'obturation (14) traversant le bouchon (16) pour saillir à l'extérieur.

7. Electrovanne selon la revendication 6, où le dispositif obturateur comprend
iv) un anneau d'étanchéité (18), monté dans l'arbre d'obturation (14), comprimé entre le bouchon (16) et ledit arbre d'obturation (14).

8. Electrovanne selon la revendication 6 ou 7, où le ressort d'obturation (26) est disposé en compression entre le bouchon (16) et l'arbre d'obturation (14).

9. Electrovanne selon l'une quelconque des revendications précédentes, où l'élément de butée (28) est galbé de façon à ce que, quand le dispositif obturateur se trouve dans la configuration de fermeture, il interfère mécaniquement avec ledit dispositif d'obturation dans le passage de la configuration de désengagement à la configuration d'engagement.

10. Electrovanne selon les revendications 1 et 9, où l'élément de butée (28) interfère structurellement avec une portion de l'arbre d'obturation (14) saillant de la plaque (8).

11. Electrovanne selon l'une quelconque des revendications précédentes, où l'axe de blocage (X) est incident à l'axe d'obturation (Y), par exemple perpendiculairement.

12. Electrovanne selon l'une quelconque des revendications précédentes, où l'élément de butée (28) présente une extension axiale prédéfinie le long de l'axe de blocage (X) et comprend des projections radiales (29a, 29b), axialement positionnés et/ou dimensionnés de façon différente, de façon à interférer structurellement avec l'arbre d'obturation (14) pour maintenir normalement le dispositif obturateur dans la configuration d'ouverture.

13. Electrovanne selon les revendications 11 et 12, où les projections radiales (29a, 29b) de l'élément de butée (28) sont disposées en deux demi-espaces différents, déterminés par un plan passant par l'axe de blocage (X) et perpendiculaire à l'axe d'obturation (Y), espacés axialement entre eux.

14. Electrovanne de sécurité (1) indiquée pour être disposée le long d'un conduit d'une installation de distribution d'un fluide, comprenant:
- un corps de vanne (2), ayant une entrée (4) qui peut être associée au conduit en amont de l'électrovanne pour consentir au fluide d'entrer et une sortie (6) pouvant être associée au conduit en aval de l'électrovanne pour consentir au fluide de sortir;
- un dispositif obturateur disposé entre l'entrée (4) et la sortie (6), indiqué pour passer d'une configuration d'ouverture, où le fluide peut passer entre l'entrée (4) et la sortie (6), et une configuration de fermeture où ce passage n'est pas consenti;
- un ressort d'obturation (26) indiqué pour influencer constamment le dispositif obturateur vers la configuration de fermeture;
- des moyens de blocage indiqués pour passer d'une configuration d'engagement, où ils sont engagés avec le dispositif obturateur pour le maintenir dans la configuration d'ouverture, à une configuration de désengagement, où ils permettent le passage du dispositif obturateur à la configuration de fermeture, lesdits moyens de blocage étant actionnés électriquement de la configuration d'engagement à la configuration de désengagement et en comprenant un élément de butée (28), engagé dans la configuration d'engagement avec le dispositif obturateur pour le maintenir dans la configuration d'ouverture;
où l'élément de butée (28) présente une extension axiale prédéfinie le long de l'axe de blocage (X) et comprend des projections radiales (29a, 29b), disposées axialement et/ou dimensionnées de façon différente, de façon à interférer structurellement avec l'arbre d'obturation (14) pour maintenir normalement le dispositif obturateur dans la configuration d'ouverture;
où le dispositif obturateur comprend:
i) une plaque de fermeture (8) indiquée pour fermer le passage entre l'entrée et la sortie du corps de vanne, et
ii) un arbre d'obturation (14), solidaire de la plaque, ayant un axe d'arbre (Y) le long duquel la plaque peut être déplacée par translation, ledit arbre présentant une extension le long de l'axe d'arbre de façon à ce qu'il puisse sortir au moins partiellement du corps de vanne,
**caractérisée en ce que** l'électrovanne comprend en outre:
i) une molette (20) fixée à l'arbre d'obturation (14);
ii) une calotte de fermeture (21), ayant une paroi latérale (22) au moins partiellement transparente et un repère de signalisation (24) sur ladite paroi latérale (22), pour signaler la position de la molette (20) par rapport audit repère (24).

15. Electrovanne selon la revendication 14, où l'axe de blocage (X) est incident à l'axe d'obturation (Y), par exemple perpendiculaire.

16. Electrovanne selon les revendications 15, où les projections radiales (29a, 29b) de l'élément de butée (28) sont disposées en deux demi-espaces différents, déterminés par un plan passant par l'axe de blocage (X) et perpendiculaire à l'axe d'obturation (Y), espacé axialement l'un de l'autre.
